# EUROPÄISCHE PATENTSCHRIFT

(11) **EP 0 705 290 B1**
(45) Veröffentlichungstag und Bekanntmachung des Hinweises auf die Patenterteilung: **06.05.1999**
(21) Anmeldenummer: 93913023.3
(22) Anmeldetag: 21.06.1993
(51) Int. Cl.: C08G 18/42, C09J 175/04, C08G 18/10

(54) **KLEB- UND DICHTSTOFF**
ADHESIVE/SEALANT MATERIAL
MATIERE ADHESIVE ET D'ETANCHEITE

(43) Veröffentlichungstag der Anmeldung: 10.04.1996
(73) Patentinhaber: Henkel Teroson GmbH, 69123 Heidelberg (DE)
(72) Erfinder: PROEBSTER, Manfred, D-69226 Nu loch (DE); SCHUMANN, Manfred, D-69121 Heidelberg (DE)
(74) Vertreter: UEXKÜLL & STOLBERG
(86) Internationale Anmeldenummer: EP9301584
(87) Internationale Veröffentlichungsnummer: WO9500572

(56) Entgegenhaltungen:
- DE-A- 3 140 884
- DE-A- 4 023 801
- DE-A- 4 210 277
- US-A- 4 352 858

## Beschreibung

Die vorliegende Erfindung betrifft Kleb- und Dichtmassen mit sehr guter Standfestigkeit und hoher Anfangstragfähigkeit, sowie deren Verwendung zur Verklebung von Werkstoffen und Bauteilen im Metall- und Karosseriebau, beispielsweise bei der Direktverglasung von Automobilscheiben. Die Erfindung wird im folgenden anhand dieser Verwendung beschrieben, ist hierauf jedoch nicht beschränkt, sondern eignet sich zur Verklebung von Bauteilen aus gleichartigem oder unterschiedlichem Material.

Polyurethan-Kleb- und Dichtstoffe spielen seit Jahren eine bedeutende Rolle bei zahlreichen technischen Anwendungen. Ihre hohe Elastizität, verbunden mit ausgezeichneter Zug- und Reißfestigkeit, ihr breites Haftspektrum mit und ohne Primer, sowie ihr vorteilhaftes Preis-/Leistungsverhältnis lassen sie besonders für die Automobilindustrie geeignet erscheinen. So hat sich der Einsatz von PU-Materialien insbesondere auch bei der direkten Einglasung von Fahrzeugscheiben durchgesetzt. Für diese Anwendungen werden pastöse, hochviskose Kleb- und Dichtmassen eingesetzt, die in der Regel durch Roboter auf den Karosserieflansch oder die Glasscheibe aufgetragen werden. Die meisten dieser Produkte sind einkomponentig und härten im Verlauf von einigen Stunden bis wenigen Tagen durch Reaktion der darin enthaltenen, ggf. verkapselten Isocyanatgruppen mit eindringender Luftfeuchtigkeit zu einem hochwertigen Elastomer aus.

Bei den bislang bekannten einkomponentigen Kleb- und Dichtmassen ist es nachteilig, daß bis zum Erreichen einer gewissen Mindestfestigkeit des Klebverbundes eine Zeitspanne von wenigstens 1 bis 2 Stunden verstreichen muß. Daher müssen in der Regel beim Einsetzen der Scheiben Fixierhilfsmittel angebracht werden, um deren Abrutschen während der weiteren Montagearbeiten zu verhindern. Es sind zahlreiche Verfahren beschrieben worden, die diesem Mißstand abzuhelfen versuchen. So erreicht man z.B. mit zweikomponentigen Materialien, wie sie in EP-A-153 456 oder EP-A-281 905 beschrieben sind, eine in der Regel schnellere und von der Luftfeuchtigkeit unabhängige Aushärtung. Nachteilig für den Anwender dieses Systems ist jedoch, daß sie apparativ schwerer zu beherrschen sind, und daß aufgrund des Vorhandenseins von zwei Komponenten Misch- und Dosierfehler auftreten können.

Auch im Falle der 1K-Materialien wurde versucht, einen schnelleren Festigkeitsaufbau während der Anfangsphase der Härtung zu erzielen. Dies wird beispielsweise erreicht durch den Einsatz spezieller Beschleuniger, wie er in EP-A-312 012, EP-A-370 164 oder US-A-4 780 520 beschrieben ist, oder durch andere chemische Aktivierung, z.B. Injektion eines Aktivators oder Behandlung mit Wasserdampf, wie in EP-A-351 728 oder DE-A-39 09 127 gezeigt wird. Eine unmittelbar nach dem Auftragen der Dichtstoffraupe wirksame Haftung und Fixierung, die beispielsweise bei der Direkteinglasung die aufgeklebte Scheibe innerhalb der ersten Minuten am Abrutschen hindern, kann mit diesen Verfahren jedoch nicht erreicht werden. Ein weiterer Nachteil der in EP-A-312 012 und EP-A-370 164 und US-A-4 780 520 genannten Systeme, die sehr aktive Katalysatoren enthalten, ist eine kürzere Lagerstabilität.

Eine weitere, zum Stand der Technik zählende Entwicklungsrichtung befaßt sich mit reaktiven Schmelzklebern (HotMelts), wie sie z.B. in EP-A-244 608, EP-A-310 704, EP-A-340 906, EP-A-369 607 und EP-A-455 400 dargestellt sind, oder mit vorvernetzenden Systemen, wie in EP-A-255 572 und DE-A-40 23 804 beschrieben. Gemeinsam ist diesen an sich brauchbaren Verfahren der Nachteil, daß der Kleb-Dichtstoff bei ziemlich hohen Temperaturen (mindestens 80°C) appliziert werden muß. Bei der überwiegenden Anzahl dieser feuchtigkeitshärtenden Schmelzklebstoffe ist wegen der stark behinderten Diffusion der Luftfeuchtigkeit die Feuchtigkeitshärtung sehr langsam. Daher müssen dieser Klebstoffe einen erheblichen Anteil ihrer Festigkeit durch den Phasenübergang flüssig/fest beim Abkühlen erzielen. Aus diesem Grunde zeigen diese Kleb-/Dichtstoffe bereits unmittelbar nach dem Auftragen eine sehr hohe Viskositätszunahme, die das Einbringen der Scheiben in die Karosserie nur unter erhöhtem Kraftaufwand ermöglicht. Gleichzeitig ist die Benetzung der Glasoberflächen durch den Dichstoff, und damit eine gute Haftung, schwieriger zu gewährleisten. Die GB 22 34 516 schlägt einen feuchtigkeitshärtenden Schmelzklebstoff vor, der zwar grundsätzlich für die Verklebung von Windschutzscheiben geeignet ist, jedoch drei entscheidende Nachteile hat:
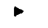 Die Auswahl der dort benötigten "Weichsegment"-Polyole und "Hartsegment"-Polyole ist eng begrenzt, da diese miteinander verträglich sein müssen,
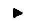 der Herstellungsprozeß der Präpolymeren verlangt mindestens 3 Stufen mit definierter Reihenfolge,
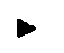 die Applikationstemperatur des Kleb-/Dichtstoffes ist sehr hoch (120°C).

Aufgabe der vorliegenden Erfindung ist es, Kleb- und Dichtstoffe zu entwicklen, die die oben genannten Nachteile nicht mehr aufweisen. Dies wird überraschend durch einen Kleb- und Dichtstoff auf der Basis reaktiver Präpolymerer/ erreicht, welcher neben Füllstoffen a) wenigstens ein bei Raumtemperatur flüssiges reaktives Präpolymer und b) wenigstens eine weitere Komponente enthält, die bei Raumtemperatur fest und bei leicht erhöhter Temperatur flüssig ist, so daß sich der Kleb- und Dichtstoff bei einer Temperatur von 40 bis 50 °C verflüssigen läßt, und die sowie zumindest teilweise unverträglich mit dem/den flüssigen Präpolymeren ist, d.h. daß beim Abkühlen des Kleb- und Dichtstoffs unter den Schmelzpunkt der bei Raumtemperatur festen Komponente dieselbe in feinsten Partikeln zu erstarren beginnt, und sich der Feststoffanteil auf Kosten der viskos-flüssigen Phase im Kleb- und Dichtstoff erhöht. Bevorzugte Ausführungsformen sind in den Unteransprüchen erläutert. Es handelt sich um Stoffe mit relativ engem Schmelzbereich und vergleichsweise niedriger Viskosität im geschmolzenen Zustand, also nicht um übliche Thermoplasten mit einem breiten, wenig wünschenswerten Erweichungsbereich. Ein weiteres wichtiges Merkmal dieses Bestandteiles ist seine zumindest teilweise Unverträglichkeit mit dem oder den anderen in der Formulierung enthaltenen Präpolymeren. Eine ausreichende Unverträglichkeit besteht, wenn beim Abkühlen des Kleb- und Dichtstoffes unter den Schmelzpunkt der bei Raumtemperatur festen Komponente dieselbe in feinsten Partikeln zu ersteren beginnt, und sich der Feststoffanteil auf Kosten der viskos-flüssigen Phase im Dichtstoff erhöht.

Die Komponente b) ist vorzugsweise bei einer Temperatur von max. 60 und insbesondere 50°C flüssig, der Schmelzbereich kann insbesondere zwischen 35 und 50°C liegen. Besonders bevorzugt als Komponente b) sind Polymere oder Präpolymere, wobei diese reaktive funktionelle Gruppen besitzen können, jedoch nicht zwangsläufig besitzen müssen. Als besonders günstig haben sich sowohl als Komponente a) als auch als Komponente b) Präpolymere mit Isocyanat-Endgruppen erweisen. Die Präpolymeren können in an sich bekannter Weise durch Umsetzung von linearen oder verzweigten Polyolen der Gruppe Polyether, Polyester, Polycarbonate, Polycaprolactone, Polycaprolactame oder Polybutadiene mit di- oder mehrfunktionellen Isocyanaten erhalten werden. Als Komponente b) haben sich Präpolymere besonders bewährt, welche aus Polycaprolactonpolyolen als Polyolkomponente und di- oder mehrfunktionellen Isocyanaten hergestellt werden können. Die bevorzugten Präpolymeren sind Umsetzungsprodukte der genannten Polyole mit aromatischen oder aliphatischen Diisocyanaten, z.B. 4,4'-Diphenylmethandiisocyanat, 2,2'- und 2,4'-Toluylendiisocyanat, 1,5-Naphthylendiisocyanat, 1,4-Phenylendiisocyanat, Hexamethylendiisocyanat, Isophorondiisocyanat, m-tetra-Methylxylylendiisocyanat und andere.

Es ist jedoch auch möglich, als Komponente b) Polymere oder Präpolymere zu verwenden, die keine NCO-Gruppen als reaktive Gruppen tragen, aber den Anspruch der Unverträglichkeit sowie des Erstarrens bei Raumtemperatur erfüllen. Als Komponente a) und/oder b) geeignete Polymere können z.B. funktionelle Silan- oder Mercaptogruppen an den Kettenenden tragen, über die eine Vernetzung erfolgen kann. Bevorzugt sind hierbei die an sich bekannten flüssigen Polyetherprepolymeren mit feuchtigkeitsreaktiven Silangruppen, wie sie z.B. in der US-A-39 71 751 oder in der EP-A-217 289 beschrieben werden. Es sind auch andere geeignete Verbindungen als Komponente b) denkbar, die nicht unbedingt zur Klasse der Polymerverbindungen gehören, sofern sie die oben genannten Kriterien des engen Schmelzbereiches knapp oberhalb Raumtemperatur und der Unverträglichkeit erfüllen. In Betracht kommen hier inerte niedermolekulare organische Verbindungen mit eng begrenztem Schmelzbereich, wie z.B. Wachse oder Paraffine, vorzugsweise mikrokristalline Wachse.

Bei geeigneter Wahl des bei Raumtemperatur festen Polymeren bzw. Präpolymeren resultieren Produkte, die schon bei geringer Erwärmung auf 50 bis 60°C und insbesondere 40 bis 50°C leicht pumpbar und gut verarbeitbar sind. Bei Raumtemperatur hingegen sind die erfindungsgemäßen Massen sehr steif und standfest, andererseits aber durch Druck noch hinreichend verformbar. Hierdurch wird eine ausgezeichnete Anfangs tragfähigkeit des als Raupe aufgetragenen Dichtstoffstranges erzielt.

Die Masse ist in diesem Zustand, im Gegensatz zu hotmeltartigen Produkten gemäß EP-A-244 608 oder EP-A-410 704, nicht etwa zähplastisch, sondern weiterhin pastös und spachtelbar. Dies ermöglicht auch einfache Korrekturen des Auftrages bei großflächigen Verklebungen wie z.B. im Busbau bzw. das Einsetzen und Positionieren großflächiger Bauteile wie z.B. Scheiben im Automobilbau.

Dem Fachmann weiterhin bekannt ist die Tatsache, daß viele abkühlende Hotmelts dazu neigen, einen sehr langen Fadenzug auszubilden. Bei den erfindungsgemäßen Massen ist dies nicht der Fall. Ein weiterer Vorteil der erfindungsgemäßen Dichtmassen ist die zu ihrer "Verflüssigung" notwendige niedrige Temperatur von nur ca. 40 bis 50°C. Da auch keine Gelierungsreaktion ablaufen muß, wie etwa in EP-A-255 572 oder US-A-4 778 845 beschrieben, kann die Aufwärmung relativ schnell und ungesteuert vorgenommen werden. Die nach der Applikation beim Abkühlen sich einstellende Verdickung des Materials verläuft jedoch nicht so schnell, daß etwa keine Korrekturen der Verklebung mehr möglich wären. Vielmehr kann die Scheibe noch bequem positioniert werden.

Wenige Minuten später besitzen die erfindungsgemäßen Klebund Dichtmassen eine Steifigkeit, die weit über derjenigen von konventionellen, bei Raumtemperatur noch verpumpbaren Materialien liegt. Dadurch kann auf den Einsatz von Fixierhilfen nach der Scheibenmontage gänzlich verzichtet werden, und die Karosserien können praktisch sofort weiterbewegt werden, was sich vorteilhaft auf die Taktzeiten in der Serienfertigung der Automobilindustrie auswirkt. Im Reparaturfall wird nach Wiedereinsetzen einer Autoscheibe hierdurch eine kürzere Aufenthaltsdauer in der Werkstatt und eine schnelle Fahrbereitschaft des Kraftfahrzeuges erzielt. Das erstarrende Polymer kann, sofern es reaktive End- oder Seitengruppen enthält, im weiteren Verlauf der Härtungsreaktion - zumindest teilweise - in das übrige Polymernetzwerk mit eingebunden werden. Es trägt hierdurch wesentlich zur Verstärkung und Verbesserung der mechanischen Eigenschaften des ausgehärteten Dichtstoffes bei. So ist z.B. überraschenderweise der Schubmodul des ausgehärteten Kleb-/Dichtstoffes signifikant höher als der von vergleichbaren kalt verpumpbaren Kleb-/Dichtstoffen. Diese erwünschte Verbesserung kann konstruktiv genutzt werden, um die Torsionssteifigkeit einer Fahrzeugkarosse zu erhöhen.

Die erfindungsgemäßen Kleb- und Dichtmassen enthalten neben den bereits genannten Bestandteilen weitere, dem Fachmann geläufige Zusatzstoffe wie Füllstoffe, Weichmacher, Katalysatoren, Haftvermittler, Alterungsschutzmittel u.a.m., wie sie üblicherweise bei der Compoundierung derartiger Rezepturen verwendet werden. Die Herstellung der Massen kann z.B. in konventionellen Planetendissolvern erfolgen. Günstigerweise arbeitet man bei einer Temperatur oberhalb des Schmelzpunktes der bei Raumtemperatur festen Komponente.

Das im folgenden geschilderte Beispiel für eine einkomponentige Kleb- und Dichtmasse dient zur Erläuterung der Erfindung; dies besagt jedoch nicht, daß sich die Erfindung nur auf einkomponentige Systeme bezieht. Vielmehr läßt sich das erfindungsgemäße Prinzip auch auf mehrkomponentige Systeme anwenden.

Die erfindungsgemäßen Kleb- und Dichtstoffe eignen sich zur Verklebung von Bauteilen aus gleichartigem oder unterschiedlichem Material, insbesondere zur strukturellen Verklebung von Teilen aus Glas, Metall, Kunststoff, Baumaterialien oder Holz. Aufgrund ihres besonderen Eigenschaftsprofiles sind sie hervorragend zur Direkteinglasung von Automobilscheiben in der Kraftfahrzeugherstellung geeignet.

### Beispiele

### Beispiel 1. Herstellung eines flüssigen Polyurethan-Präpolymeren

4000 g eines Polyoxypropylenethertriols vom Molekulargewicht 6000 g/mol und 640 g Dioctylphthalat werden bei 70°C unter Unterdruck und Durchleiten von trockenem Stickstoff etwa 1 Stunde lang entwässert, bis der Wassergehalt der Mischung unter 0,05% liegt. Man gibt nun unter Stickstoff 510 g reines, geschmolzenes 4,4'-Diphenylmethandiisocyanat hinzu. Nach erfolgter Zugabe und Homogenisierung, werden 2,0 ml einer 10%-igen Lösung von Zinn(II)Octoate in Xylol zugegeben. Nach abgeklungener Exotherme führt man bei 80°C so lange weiter, bis ein konstant bleibender Isocyanatgehalt von etwa 1,7% erreicht wird. Man erhält eine klare, farblose bis schwach gelbliche viskose Flüssigkeit.

### Beispiel 2. Herstellung eines festen Polyurethan-Präpolymeren

4000 g eines Polycaprolactondiols vom Molekulargewicht 2000 g/mol werden aufgeschmolzen, und mit 696 g Toluylendiisocyanat (80:20/Isomerengemisch) vermischt. Man läßt unter Stickstoff bei 80°C ca. 3 Stunden rühren, bis ein konstant bleibender Isocyanatgehalt von etwa 3,3% erreicht wird. Man erhält eine klare, farblose Flüssigkeit, die beim Abkühlen zu einer festen, weißen Masse erstarrt.

### Beispiel 3. Herstellung einer Kleb-/Dichtmasse

1080 g des flüssigen Präpolymers (wie unter Punkt 1 beschrieben), 600 g Dioctylphthalat, sowie 900 g Ruß und 240 g feinteilige Kreide werden in einem Planetenmischer unter Vakuum homogen vermischt, wobei sich die Masse auf ca. 70°C erwärmt. Hierzu werden 180g des zuvor bei 50 bis 60°C aufgeschmolzenen Präpolymers (2) unter Vakuum eingemischt. Zum Schluß werden 1,2 g Dibutylzinndilaurat, gelöst in der zehnfachen Menge DOP, unter Vakuum eingerührt. Man erhält eine pastöse, standfeste Masse, welche noch vor dem Abkühlen luftdicht in Kartuschen abgefüllt wird. Die Eigenschaften dieser Kleb-/Dichtmasse sind in Tabelle 1 aufgeführt.

**Tabelle 1:**

| Eigenschaften der Kleb-/Dichtmasse | |
|---|---|
| Hautbildungszeit | ca. 30. Min. |
| Durchhärtung nach 24 h (Normklima 24/50) | ca. 4 mm |
| Shore A (DIN 53505) | 70 |
| Zugefestigkeit (DIN 53504) | 9 MPa |
| E-Modul 100% (DIN 53504) | 2,7 MPa |
| Bruchdehnung (DIN 53504) | 450% |

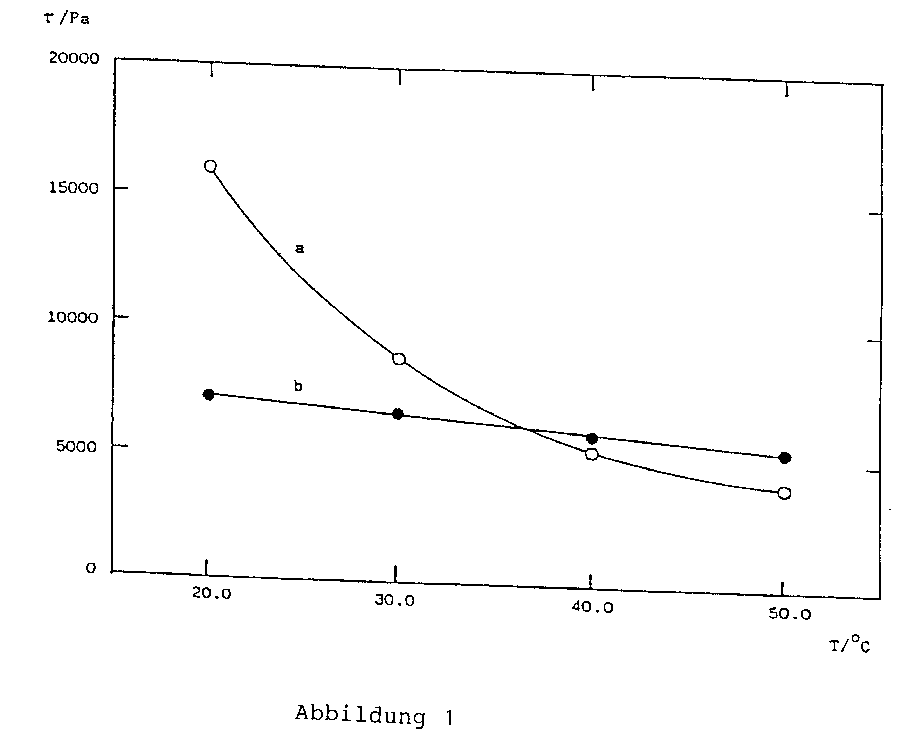

Abbildung 1 zeigt das Schubspannungs-/Temperaturverhalten der erfindungsgemäßen Dichtmasse im Vergleich zu einem handelsüblichen Produkt der oberen Viskositätsklasse. Die Schubspannung wurde bei einer Scherung von D=1,0 Sek⁻¹ gemessen.

Es ist klar ersichtlich, daß die erfindungsgemäße Dichtmasse bei 40 bis 50°C besser und leichter zu verarbeiten ist als das handelsübliche Material, jedoch bei Raumtemperatur eine wesentlich höhere Schubspannung (und damit Standfestigkeit) aufweist. Die deutliche Verbesserung, die durch die erfindungsgemäße Dichtmasse im Vergleich zu handelsüblichen Dichtmassen erzielt werden kann, zeigt sich auch bei einem Ausreißversuch. Gemessen wurde die Belastung, die zum Herausreißen einer Kraftfahrzeug-Seitenscheibe 10 Min. nach Einsetzen der Scheibe in den Karosserieflansch erforderlich war. Die Ergebnisse sind in Tabelle 2 dargestellt.

**Tabelle 2:**

| Belastbarkeit einer Seitenscheiben-Verklebung, 10 Min. nach Einbau der Scheibe | |
|---|---|
| handelsüblicher Kleb-/Dichtstoff (ohne Komponente b) | 155 kg |
| Dichtmasse des Beispiels 3: | 270 kg |

Tabelle 3 zeigt den Kraftaufwand, der zum Lösen von zwei miteinander verklebten Glasplatten aufgebracht werden mußte. Es wurde eine Klebstoffraupe von 100 mm Länge und 7,0 ± 0,2 g Gewicht zwischen zwei Glasplatten 100 x 150 mm auf 3 mm Schichtdicke zusammengepreßt und nach 30 Min. Wartezeit auseinandergezogen. Auch hier treten die Vorteile der erfindungsgemäßen Dichtmasse deutlich zutage.

**Tabelle 3:**

| Zugversuche an zwei miteinander verklebten Glasplatten, 30 Min. nach der Verklebung. | |
|---|---|
| Handelsüblicher, höchstviskoser Kleb-/Dichtstoff (ohne Komponente b) | 72 N |
| Dichtmasse des Beispiels 3 | 176 N |

**Tabelle 4:**

| Haltevermögen einer zwischen zwei Platten verpreßten Klebstoffraupe bei senkrechter Aufhängung an einer der beiden Platten: | |
|---|---|
| Handelsüblicher, höchstviskosker Kleb-/Dichtstoff (ohne Komponente b) | 160-200 g (entsprechend 8-10 g/cm² Verklebungsfläche) |
| Dichtmasse des Beispiels 3 | 500-600 g (entsprechend 25-30 g/cm² Verklebungsfläche) |

Tabelle 4 zeigt, welches Gewicht eine 100 mm lange und 7,0 ± 0,2 g schwere Dichtstoffraupe, die 5 min nach der Applikation zwischen zwei Platten aus EC-Blech und Glas auf 3 mm Schichtdicke zusammengepreßt wurde, ohne Verrutschen zu halten vermag, wenn die Anordnung sofort nach dem Verpressen in vertikaler Position an der EC-Platte aufgehängt wird. Die Glasplatte hängt frei und übt aufgrund ihres jeweiligen Eigengewichts eine entsprechende statische Zugbelastung auf die Klebfuge aus.

### Beispiel 4: Herstellung einer festen, nicht funktionellen Oligomerkomponente.

1000 g eines isocyanat-endständigen Prepolymeren entsprechend Beispiel 2 werden bei 70°C aufgeschmolzen und mit 80 g n-Hexanol vermischt. Man läßt noch 3 h lang bei 70°C ausreagieren. Beim Auskühlenlassen erstarrt das Produkt zu einer festen, weißen Masse, die praktisch kein Isocyanat mehr enthält.

### Beispiel 5: Herstellung einer Kleb-/Dichtmasse

Analog zur Beispiel 3 wird eine Kleb-/Dichtmasse unter Verwendung des flüssigen Prepolymeren des Beispiels 1 und der Oligomerkomponente des Beispiels 4 hergestellt.

Die Schubspannungs/Temperatur-Kurve dieser Kleb-/Dichtmasse entspricht weitgehend derjenigen von Beispiel 3 in Abbildung 1.

Ebenso stimmt auch das Haltevermögen einer zwischen zwei Platten verpreßten Raupe mit dem Wert des Beispiels 3 in Tabelle 4 überein.

Dieses Beispiel zeigt, daß die speziellen, erfindungsgemäß erzielten rheologischen Eigenschaften auch mit einem nicht-funktionellen Additiv erreicht werden können. Im Vergleich zur Kleb-/Dichtmasse aus Beispiel 3 ist erwartungsgemäß die mechanische Festigkeit der ausgehärteten Dichtmasse geringer, da das Additiv nicht zum Polymerverbund beiträgt, sondern nur als Füllstoff vorliegt. Trotzdem sind die auf diese Weise erzielbaren Endfestigkeiten für viele Anwendungen völlig ausreichend.

### Beispiel 6: Herstellung einer Kleb-/Dichtmasse unter Verwendung eines Paraffin-Wachses als Komponente b.

Analog zu Beispiel 3 wird eine Kleb-/Dichtmasse hergestellt, bei der anstelle des Prepolymeren des Beispiels 2 ein bei 50 bis 55°C schmelzendes Kohlenwasserstoff-Gemisch (Paraffin-Wachs) eingesetzt wird.

Auch bei dieser erfindungsgemäßen Formulierung resultieren die beschriebenen rheologischen Eigenschaften, d.h. niedrige Viskosität und leichte Verarbeitbarkeit in der Wärme, dagegen hohe Verdickung und gutes Haltevermögen beim Abkühlen. Das Beispiel illustriert gleichzeitig, daß auch niedermolekulare und völlig inerte organische Verbindungen für diesen Zweck geeignet sein können, sofern sie nur einen entsprechenden Schmelzbereich besitzen und sowohl im festen als auch im flüssigen Zustand weitgehend unlöslich in der Prepolymer/Weichmacher-Phase sind. Erst durch diese Unverträglichkeit bekommt das Additiv seinen typischen Charakter als "aufschmelzbarer Füllstoff" und zeigt den erwünschten starken Einfluß auf die Viskosität der Kleb/Dichtmasse bei Über- bzw. Unterschreiten seiner Schmelztemperatur.

## Patentansprüche

1. Kleb- und Dichtstoff auf der Basis reaktiver Präpolymerer, dadurch gekennzeichnet, daß er neben Füllstoffen a) wenigstens ein bei Raumtemperatur flüssiges reaktives Präpolymer und b) wenigstens eine weitere Komponente enthält, die bei Raumtemperatur fest und bei leicht erhöhter Temperatur flüssig ist, so daß sich der Kleb- und Dichtstoff bei einer Temperatur von 40 bis 50 °C verflüssigen läßt, und die zumindest teilweise unverträglich mit dem/den flüssigen Präpolymeren ist, d.h. daß beim Abkühlen des Kleb- und Dichtstoffs unter den Schmelzpunkt der bei Raumtemperatur festen Komponente dieselbe in feinsten Partikeln zu erstarren beginnt, und sich der Feststoffanteil auf Kosten der viskos-flüssigen Phase im Kleb- und Dichtstoff erhöht.

2. Kleb- und Dichtstoff nach Anspruch 1, dadurch gekennzeichnet, daß die Komponente b) bei einer Temperatur von max. 50°C flüssig ist.

3. Kleb- und Dichtstoff nach Anspruch 1 oder 2, dadurch gekennzeichnet, daß es sich bei der genannten Komponente b) um ein Polymer oder Präpolymer handelt.

4. Kleb- und Dichtstoff nach Anspruch 3, dadurch gekennzeichnet, daß das Polymer oder Präpolymer reaktive funktionelle Gruppen aufweist.

5. Kleb- und Dichtstoff nach den Ansprüchen 1 bis 4, dadurch gekennzeichnet, daß er als Komponente a) und/oder b) Präpolymere mit Isocyanatendgruppen enthält.

6. Kleb- und Dichtstoff nach Anspruch 5, dadurch gekennzeichnet, daß die Präpolymeren aus linearen oder verzweigten Polyolen der Gruppen Polyether, Polyester, Polycarbonate, Polycaprolactone, Polycaprolactame oder Polybutadiene erhalten werden.

7. Kleb- und Dichtstoff nach Anspruch 6, dadurch gekennzeichnet, daß das als Komponente b) vorhandene Präpolymer aus einem Polycaprolactonpolyol als Polyolkomponente gebildet wurde.

8. Kleb- und Dichtstoff nach den Ansprüchen 5 bis 7, dadurch gekennzeichnet, daß die Präpolymeren Umsetzungsprodukte der Polyole mit aromatischen oder aliphatischen Diisocyanaten sind.

9. Kleb- und Dichtstoff nach den Ansprüchen 1 bis 8, dadurch gekennzeichnet, daß er neben den genannten Präpolymeren als weitere Hilfs- und Zusatzstoffe Weichmacher, Thixotropierhilfsmittel, Haftvermittler, Katalysatoren, Licht- und Alterungsschutzmittel, Flammschutzmittel oder Fungizide enthält.

10. Verfahren zur Herstellung eines Kleb- und Dichtstoff nach einem der Ansprüche 1 bis 9, dadurch gekennzeichnet, daß man die Compoundierung bei einer Temperatur über dem Schmelzpunkt des die Komponente b) bildenden bei Raumtemperatur festen Präpolymeren durchführt.

11. Verwendung des Kleb- und Dichtstoffes nach einem der Ansprüche 1 bis 9 zur strukturellen Verklebung von Teilen aus Glas, Metall, Kunststoff, Baumaterialien oder Holz.

12. Verwendung des Kleb- und Dichtstoffes nach Anspruch 1 bis 9 zur Direkteinglasung von Automobilscheiben.

## Claims

1. Adhesive and sealing material based on reactive prepolymers, characterised in that, in addition to fillers, it contains a) at least one reactive prepolymer which is liquid at room temperature and b) at least one other component which is solid at room temperature and liquid at slightly raised temperature, so that the adhesive and sealing material can be liquefied at a temperature of 40 to 50°C, and which is at least partially incompatible with the liquid prepolymer(s), i.e. that when the adhesive and sealing material is cooled below the melting point of the component which is solid at room temperature, this begins to solidify into very fine particles, and the solid proportion increases at the cost of the viscous-liquid phase in the adhesive and sealing material.

2. Adhesive and sealing material according to claim 1, characterised in that component b) is liquid at a temperature of max. 50°C.

3. Adhesive and sealing material according to claim 1 or 2, characterised in that the said component b) is a polymer or prepolymer.

4. Adhesive and sealing material according to claim 3, characterised in that the polymer or prepolymer has reactive functional groups.

5. Adhesive and sealing material according to claims 1 to 4, characterised in that it contains prepolymers with isocyanate end-groups as component a). and/or b).

6. Adhesive and sealing material according to claim 5, characterised in that the prepolymers are obtained from linear or branched polyols of the groups of polyethers, polyesters, polycarbonates, polycaprolactones, polycaprolactams or polybutadienes.

7. Adhesive and sealing material according to claim 6, characterised in that the prepolymer present as component b) was formed from a polycaprolactonepolyol as polyol component.

8. Adhesive and sealing material according to claims 5 to 7, characterised in that the prepolymers are reaction products of the polyols with aromatic or aliphatic diisocyanates.

9. Adhesive and sealing material according to claims 1 to 8, characterised in that, in addition to the said prepolymers, it contains as further auxiliaries and additives, plasticisers, thixotropy auxiliaries, adhesion promoters, catalysts, anti-light and -ageing agents, flame protection agents or fungicides.

10. Process for the production of an adhesive and sealing material according to one of claims 1 to 9, characterised in that the compounding is carried out at a temperature above the melting point of the prepolymer solid at room temperature, forming component b).

11. Use of the adhesive and sealing material according to one of claims 1 to 9 for the structural gluing of parts made of glass, metal, plastic, building materials or wood.

12. Use of the adhesive and sealing material according to claim 1 to 9 for directly glazing automobile window panes.

## Revendications

1. Matière adhésive et d'étanchéité à base de prépolymère réactifs,
caractérisée en ce qu'
il contient outre des charges a) au moins un autre composant qui est solide à température ambiant et liquide à une température légèrement plus élevée, de sorte que la matière adhésive et d'étanchéité peut être liquéfiée à une température de 40 à 50°C, et qui est au moins partiellement incompatible avec le/les prépolymères liquides, c'est-à-dire que lors du refroidissement de la matière adhésive et d'étanchéité en dessous du point de fusion du composant solide à température ambiante, celle-ci commence à se solidifier en particules très fines, et la proportion de matière solide augmente au détriment de la phase visco-liquide dans la matière adhésive et d'étanchéité.

2. Matière adhésive et d'étanchéité selon la revendication 1,
caractérisée en ce que
le composant b) est liquide à une température maximale de 50°C.

3. Matière adhésive et d'étanchéité selon les revendications 1 ou 2,
caractérisée en ce qu'
il s'agit pour le composant b) connu d'un polymère ou d'un prépolymère.

4. Matière adhésive et d'étanchéité selon la revendication 3,
caractérisée en ce que
le polymère ou prépolymère comporte des groupes fonctionnels réactifs.

5. Matière adhésive et d'étanchéité selon les revendications 1 à 4,
caractérisée en ce qu'
elle contient comme composant a) et/ou b) des prépolymères avec des groupes terminaux d'isocyanate.

6. Matière adhésive et d'étanchéité selon la revendication 5,
caractérisée en ce que
les prépolymères sont obtenus à partir des polyols linéaires ou ramifiés des groupes polyéthers, polyesters, polycarbonates, polycaprolactones, polycaprolactames ou polybutadiènes.

7. Matière adhésive et d'étanchéité selon la revendication 6,
caractérisée en ce que
le prépolymère présente en tant que composant b) est formé d'un polycaprolactonepolyol comme composant polyol.

8. Matière adhésive et d'étanchéité selon les revendications 5 à 7,
caractérisée en ce que
les prépolymères sont des produits de réaction des polyols avec des diisocyanates aromatiques ou aliphatiques.

9. Matière adhésive et d'étanchéité selon les revendications 1 à 8,
caractérisée en ce qu'
elle contient outre les prépolymères cités comme autres adjuvants et additifs, des plastifiants, des adjuvants de thixotropie, des agents adhésifs, des catalyseurs, des agents de protection contre la lumière et le vieillissement, des agents de protection contre les flammes ou des fongicides.

10. Procédé de fabrication d'une matière adhésive et d'étanchéité selon une des revendications 1 à 9,
caractérisé en ce qu'
on réalise le compoundage à une température au dessus du point de fusion du prépolymère solide à température ambiante formant le composant b).

11. Utilisation de la matière adhésive et d'étanchéité selon une des revendications 1 à 9 pour le collage structurel de pièces en verre, métal, matière plastique, matériaux de construction ou bois.

12. Utilisation de la matière adhésive et d'étanchéité selon les revendications 1 à 9 pour le vitrage direct de vitres d'automobile.
